# EUROPÄISCHE PATENTSCHRIFT

(11) **EP 0 809 777 B1**
(45) Veröffentlichungstag und Bekanntmachung des Hinweises auf die Patenterteilung: **14.02.2001**
(21) Anmeldenummer: 96946199.5
(22) Anmeldetag: 11.12.1996
(51) Int. Cl.: F26B 1/00

(54) **VERFAHREN UND VORRICHTUNG ZUR TROCKNUNG VON ORGANISCHEN ABFÄLLEN**
PROCESS AND DEVICE FOR DRYING ORGANIC WASTE
PROCEDE ET DISPOSITIF POUR LE SECHAGE DE DECHETS ORGANIQUES

(30) Priorität: 18.12.1995 DE 19547062
(43) Veröffentlichungstag der Anmeldung: 03.12.1997
(73) Patentinhaber: Lurgi Entsorgung GmbH, 60439 Frankfurt (DE)
(72) Erfinder: DOLLE, Lothar, D-44627 Herne (DE); LISTRINGHAUS, Walter, D-58809 Neuenrode (DE); PLATEN, Elmar, D-40670 Meerbusch (DE); VOLLMER, Friedel, D-44652 Herne (DE)
(74) Vertreter: Vomberg, Friedhelm, Dipl.-Phys.
(86) Internationale Anmeldenummer: DE9602421
(87) Internationale Veröffentlichungsnummer: WO9722842

(56) Entgegenhaltungen:
- EP-A- 0 413 992
- WO-A-91/12829
- WO-A-92/18611
- DE-A- 3 204 471

## Beschreibung

Die Trocknung von organischen Abfällen verfolgt den Zweck, diese Abfälle in einen Status zu überführen, in dem der biologische Abbau drastisch reduziert und im Idealfall völlig zum Erliegen gekommen ist, so daß eine emissionsarme Lagerung mit der Möglichkeit der späteren Verbrennung oder eine unmittelbare Verbrennung unter Ausnutzung der Heizwerte des getrockneten Abfalles durchzuführen.

Wie aus der DE-Z "Müll und Abfall" 11, 95, Seiten 769 bis 777, hervorgeht, geht man in der Bioabfallkompostierung davon aus, daß unter 25 Massen-% Wassergehalt die biologische Aktivität drastisch reduziert ist, bei Restfeuchtigkeitsgehalten von 15 % oder weniger kann von einer sogenannten biologischen Starre gesprochen werden. So ist z.B. bekannt, daß im sensiblen Bereich der Nahrungsmittel Getreide und ähnliches unter 15 Massen-% Restfeuchte langfristig lagerbar ist. Bei dem in der genannten Zitatstelle beschriebenen sogenannten Trockenstabilatverfahren konnte in Gärbehältertests auch bei 25 Massen-% Restfeuchte keine mikrobielle Stoffwechselativität mehr festgestellt werden, diese setzte erst bei 30 Massen-% ein. Durch die Absenkung des Wassergehaltes von 40 Massen-% und mehr auf die vorgenannten niedrigeren Werte ist der Kohlenstoff vor der mikrobiellen Umsetzung geschützt und somit bei Einhaltung entsprechender Randbedingungen als Ressource gesichert. Eine emissionsarme Lagerung von auf Restfeuchtegehalte von maximal 15 Massen-% getrockneten Abfällen ergibt sich daraus, daß die Bildung von Sickerwasser aufgrund der Trocknung unterbunden ist und die (Methan)Gasentwicklung aufgrund der biologischen Starre sehr stark reduziert ist.

Damit wird ein Alternativweg zu einem kontinuierlichen Kompostierverfahren von organischen Abfällen beschritten, bei dem eine Verrottung des organischen Abfalles mit späterer Kompostierung durchgeführt wird. Bei bekannten Kompostierverfahren wird der organische Abfall als Haufwerk in einem geschlossenen Belüftungsreaktor aufgeschichtet und zumeist von unten nach oben mit Luft durchströmt, wobei darauf zu achten ist, daß ggf. unter Zusatz von Wasser eine für die Verrottung notwendige Rottefeuchte von mindestens 40 % aufrechterhalten wird. Nach ca. 10 Tagen kann die Rotte dem Behälter'entnommen, abgesiebt und einer anschließenden Kompostierung zugeführt werden.

Die WO 91/12829 beschreibt ein Verfahren zur Kompostierung von organischen Abfällen in geschlossenen Behältern, bei dem die aus einem ersten belüfteten Kompostierungsbehälter stammende Abluft zumindest teilweise als Zuluft in einen zweiten Kompostierungsbehälter geleitet werden soll. Ggf. soll die Abluft, bevor sie schließlich über einen Geruchsfilter ins Freie geleitet wird, einen Wärmetauscher passieren, der die Ablufttemperatur absenkt.

Es ist Aufgabe der vorliegenden Erfindung, ein Verfahren und eine Vorrichtung anzugeben, bei dem bzw. der in leicht handhabbarer Weise im Hinblick auf einen geringstmöglichen Energieverbrauch eine Trocknung des Abfalles auf Restfeuchtewerte durchführbar ist, bei denen eine emissionsarme Lagerung und/oder eine Verbrennung der so behandelten Abfälle möglich ist.

Diese Aufgabe wird durch das Verfahren nach Anspruch 1 gelöst.

Die organischen Abfälle werden zwei zeitlich aufeinanderfolgenden Trocknungsstufen unterworfen, wobei die Abfälle in einer ersten Stufe lediglich belüftet und durch diese Belüftung gleichzeitig teilentwässert werden. Bei dieser Belüftung verrottet das Abfallmaterial in bekannter Weise, wobei die Abfallbzw. Rottetemperatur auf Werte von bis zu 70°C ansteigen und auf diesem Temperaturniveau bei dauernder Belüftung zur Stützung der mikrobiellen Aktivität eine Zeit lang verbleibt, bevor die Rottetemperatur allmählich wieder absinkt. In der ersten Trocknungsstufe des erfindungsgemäßen Verfahrens wird jedoch die Luft mit dem Ziel durch die Rotte geblasen, den Feuchtegehalt des die Rotte bildenden organischen Abfalles zu senken. Die bei der Verrottung entstehende Prozeßwärme wird erfindungsgemäß in der zweiten Stufe zur Resttrocknung des organischen Abfalles auf gewünschte maximale Restfeuchten ausgenutzt. Durch die Teilentwässerung in der ersten Stufe sinkt der Feuchtegehalt der Rotte so weit, bis die Verrottung stark nachläßt, was mit einem Absinken der Rottetemperatur einhergeht. Die Resttrocknung dieses Rottematerials (ohne weitere Verrottung) kann nun mittels vorgewärmter Luft, die das Rottematerial durchströmt, durchgeführt werden, wobei zur Erwärmung dieser Luft die Prozeßwärme aus der ersten Verfahrensstufe ausgenutzt wird.

Weiterbildungen dieses erfindungsgemäßen Verfahrens sind in den Unteransprüchen beschrieben.

Gemäß der Erfindung wird in einer ersten Stufe durch gesteuerte Belüftung der organischen Abfälle eine Vortrocknung auf einen Restfeuchtegehalt der Abfälle (der Rotte) von 30 bis 28 Massen-% durchgeführt. Bei Reduzierung der Feuchte auf diese Gehalte kann kein biologischer Abbau mehr stattfinden, d.h., die Rottetemperatur sinkt auf Werte von 40 bis 45°C ab. Zu diesem Zeitpunkt wird das Abfallmaterial von der ersten Stufe in die zweite Stufe überführt, wo die Resttrocknung auf Restfeuchten von ≤15 Massen-% mittels erwärmter durchströmender Luft vorgenommen wird.

Die Abfälle werden in einem geschlossenen Raum, der auch ein Behälter sein kann, mit Außenluft durchströmt, die hierbei sowohl Feuchtigkeit als auch die Prozeßwärme aufnimmt, wobei die mittels eines Wärmetauschers der Abluft der ersten Stufe entnommene Prozeßwärme unter Zuhilfenahme einer Wärmepumpe auf ein höheres Temperaturniveau gebracht und einem zweiten Wärmetauscher zugeführt wird, der die (Zu-)Luft, die durch die Abfälle in der zweiten Stufe geleitet wird, vorher erwärmt. Mittels der nach dem Stand der Technik bekannten Wärmepumpen wird die Prozeßenergie der ersten Stufe mit einem niedrigeren thermischen Niveau auf eine höhere Temperatur gebracht, wo sie über den zweiten Wärmetauscher zur Erwärmung der Luft verwendet wird, die in der zweiten Stufe, d.h., in einem nachfolgenden Schritt durch das vorbehandelte Abfallmaterial geblasen wird.

Nach einer Weiterbildung des erfindungsgemäßen Verfahrens werden die Abfälle durch einen einzigen geschlossenen Raum kontinuierlich oder diskontinuierlich vorwärtsbewegt, in dessen erstem Teil die Abfälle mit von außen zugeführter Luft durchströmt und in dessen zweiten Teil, den die Abfälle durch die Vorwärtsbewegung zeitlich später erreichen, von außen zugeführte Luft erwärmt und durch die kontinuierlich oder diskontinuierlich weiterbewegten Abfälle geführt bzw. geblasen wird. Zumindest ist der ersten Stufe wird die Luft vorzugsweise derart eingeblasen, daß sie die aufgeschichteten organischen Abfälle von unten nach oben durchströmt. Da in der ersten Stufe durch die Verrottung Prozeßwärme entsteht, die nach oben entweicht, wird mit einer Luftströmung von unten nach oben eine Art Gleichstromprinzip realisiert. In der zweiten Stufe, bei der der Verrottungsvorgang beendet ist, kann die Strömungsrichtung der vorgewärmten Luft beliebig gewählt werden, jedoch wird auch hier vorzugsweise ein Luftstrom gewählt, der das aufgeschichtete Rottematerial von unten nach oben durchströmt. Vorzugsweise wird die Luft in der ersten und/oder der zweiten Stufe als Druckluft eingeblasen.

Nach einer weiteren Ausgestaltung wird die erste Stufe über eine Zeit von 5 bis 15 Tagen, vorzugsweise 5 Tagen, und die zweite Stufe über eine Zeit von 4 bis 6 Tagen, vorzugsweise 5 Tagen, durchgeführt. Somit ergibt sich im optimalen Fall eine Abfallbehandlungszeit, bei der der Abfall im Endzustand Feuchtigkeitsgehalte ≤15 Massen-% aufweist, von 9 bis 10 Tagen. Längere Behandlungszeiten hängen im wesentlichen von der Ausgangsfeuchte der organischen Materialien, dem Luftdurchsatz und anderen Prozeßführungsbedingungen ab. Weiterhin vorzugsweise wird die Luft für die erste und die zweite Stufe demselben Reservoir entnommen, im einfachsten Fall der Außenluft. Nach einer besonderen Ausgestaltung der Erfindung wird jedoch die Luft verwendet, die als Abluft einer Halle entnommen wird, in der unbehandelte und/oder bereits getrocknete Abfälle und/oder einer Rotte unterzogenen Abfälle lagern. Hierbei kann ggf. die höhere Temperatur dort entnommener Luft ausgenutzt werden.

Um Geruchsbelästigungen zu vermeiden, wird die Abluft aus dem ersten und dem zweiten Verfahrensschritt einem Biofilter zugeführt.

Der Luftdurchsatz durch die Abfälle in der ersten und/oder der zweiten Stufe wird vorteilhafterweise in Abhängigkeit der Rottematerialtemperatur, der Rottefeuchtigkeit, des CO₂- und/oder CH₄-Gehaltes, der in der jeweiligen Abluft gemessen wird, gesteuert. Die Steuerung dient in der ersten Verfahrensstufe dazu, die biologische Aktivität, d.h., die Verrottung, zu optimieren und in der zweiten Stufe eine schnellstmögliche Resttrocknung zu bewirken. Die Rottematerialtemperatur bzw. Rottefeuchtigkeit kann durch Meßlanzen, aber auch indirekt durch Meßfühler in der Abluftleitung gemessen werden.

Die Dauer der ersten Stufe wird vorzugsweise durch das zeitliche Temperaturprofil der Abfälle bestimmt, und zwar derart, daß die erste Stufe mindestens so lange durchgeführt wird, wie die Abfall-(Rotte-)Temperatur einen Wert von bis zu 70°C nicht unterschreitet und maximal so lange, bis die Rottetemperatur auf Werte um 45°C abgesunken ist. Die minimale Dauer der ersten Stufe soll somit zur Ausnutzung der Prozeßwärme dienen, die bei Rottetemperaturen von bis zu 70°C entsteht. Maximal ist die erste Stufe so lange durchzuführen, bis die Verrottung zumindest weitgehend zum Erliegen gekommen ist, was bei Rottetemperaturen von 45°C der Fall ist. Da in der ersten Stufe - anders als bei nach dem Stand der Technik bekannten Kompostierungsverfahren - keine Feuchtigkeit zugeführt wird, geht die sinkende Rottetemperatur auch mit einer Absenkung des Rottefeuchtigkeitsgehaltes einher.

Vorrichtungstechnisch wird die Aufgabe mit der Vorrichtung nach Anspruch 7 gelöst. Diese besitzt in unterschiedlichen miteinander verbundenen oder voneinander getrennten geschlossenen Räumen bzw. Behältern jeweils Belüftungseinrichtungen, wobei die Abluftleitung (oder die Abluftleitungen) des ersten Raumes einen Wärmetauscher aufweist, der mit einer Wärmepumpe verbunden ist, die mit einem Wärmetauscher der Zuluftleitung für den zweiten Raum in Verbindung steht.

Vorzugsweise besteht die Belüftungseinrichtung eines jeden Raumes, zumindest des ersten Raumes, aus einem unterhalb einer Sohle der zu einem Haufwerk aufgeschichteten Abfälle angeordneten Druckluftgebläse und einer oberhalb des Haufwerkes liegenden Luftabzugsleitung, die ggf. ein Sauggebläse aufweisen kann.

Nach einer weiteren Ausgestaltung der Erfindung weisen beide Räume ein gemeinsames Druckluftgebläse auf, von dem Zweigleitungen zu den jeweiligen Räumen bzw. Raumteilen abgehen. Die Zweigleitungen, unter denen auch Mehrwegverzweigungen zu verstehen sind, und deren Mündungsstutzen sind so angeordnet, daß eine möglichst gleichmäßige Druckluftbeaufschlagung und ein möglichst gleichmäßiger Luftdurchsatz durch das aufgeschichtete Haufwerk erreicht werden.

Nach einer weiteren Ausgestaltung der Erfindung ist das Druckluftgebläse mit einer Regelschaltung für die Regelung der Luft-Förderleistung in Abhängigkeit von durch Meßfühlern gemessenen CO₂-, CH₄- oder Feuchtungs- und Temperaturwerten der Rotte verbunden. Betreffende Meßfühler sind vorzugsweise in der Abluftleitung angeordnet.

Nach einer Ausgestaltung der Erfindung wird das zweistufige Verfahren in einer einzigen Halle, vorzugsweise einem Rottetunnel durchgeführt. Diese besitzt Schubböden als Fördermittel für die Abfälle, mittels derer die Abfälle vom Eintritts- zum Austrittsende kontinuierlich oder quasi kontinuierlich bewegbar sind. Die Halle bzw. der Rottetunnel bildet zwei miteinander verbundene Räume, wobei in dem ersten Rottetunnelteil das Rottematerial (die Abfälle) aerob behandelt und hierbei vorgetrocknet und in dem zweiten Rottetunnelteil die weitergeförderte Rotte mittels erwärmter Luft auf den Restfeuchtegehalt ≤15 Massen-% getrocknet wird. Unter Schubböden wird eine Anordnung verstanden, bei der die gesamte Fläche in gleitend gelagerte Längsbalken aufgeteilt ist, die in mehreren, beispielsweise drei Gruppen unabhängig voneinander hydraulisch vorwärts-und zurückbewegt werden können. Durch gleichzeitige Bewegung aller Schubbalken wird das darauf ruhende Material vorwärtstransportiert. Während der Rücklaufphase werden dagegen die Balken in beispielsweise drei Gruppen nacheinander unter dem Material zurückgezogen. Aufgrund der geringeren Reibung nimmt das Material die Rückbewegung der einzelnen Balkengruppen nicht auf, es verharrt also in der vorgeschobenen Position auf dem jeweils ruhenden Balken. Die Längsbalken eines Schubbodens bestehen vorzugsweise aus Edelstahlprofilen, die auf Kunststoffgleitlagern geführt und gegeneinander abgedichtet sind. Hierbei sind Flächenlasten von 5 mg/m² erreichbar.

Nach einer weiteren Ausgestaltung der Erfindung sind die Abluftleitungen beider Räume bzw. der Halle miteinander verbunden und münden in einen Biofilter. Vorzugsweise sind unterhalb der Sohle Sicken vorgesehen, in denen das Prozeßwasser aufgefangen und einem Sammelbehälter zugeführt wird.

Das erfindungsgemäße Verfahren und die beschriebene Vorrichtung sind prinzipiell zur Behandlung jeglicher organischer Abfälle geeignet, worunter kommunale Abfälle, wie Hausmüll, dem Hausmüll ähnlicher Gewerbemüll, landwirtschaftliche Abfälle, Klärschlämme etc. und beliebige Mischungen aus den vorgenannten Stoffen zu verstehen sind. Etwa im Abfall enthaltene Störstoffe, wie Steine, Beton, Metallteile, Kunststoffe, Reifen, Textilien oder auch Batterien, Chemikalien, Teerpappen sowie biologische Störstoffe werden ggf. vorher aussortiert.

Ein Ausführungsbeispiel der Erfindung ist in den Zeichnungen dargestellt. Es zeigen
- Fig. 1: ein Blockschema des erfindungsgemäßen Verfahrens und
- Fig. 2: einen Längsschnitt durch einen Rottetunnel.

Die im folgenden beschriebene mechanisch-biologische Abfallbehandlung von Müll dient der Reduzierung der zu deponierenden oder zu verbrennenden Abfallmengen und entspricht somit der umweltpolitischen Zielsetzung, einen möglichst hohen Anteil des Abfallaufkommens in den Wirtschaft- bzw. Naturkreislauf zurückzuführen. Im wesentlichen wird der von Störstoffen befreite Hausmüll oder hausmüllähnlicher Gewerbemüll behandelt, der als organischer Abfall angenommen, aufbereitet und als Stabilat gelagert oder einer Verbrennung zugeführt wird. Das aus dem Verfahren entnommene Endprodukt kann beispielsweise zu Rundballen gepreßt werden, die einer Verbrennungsanlage zugeführt werden.

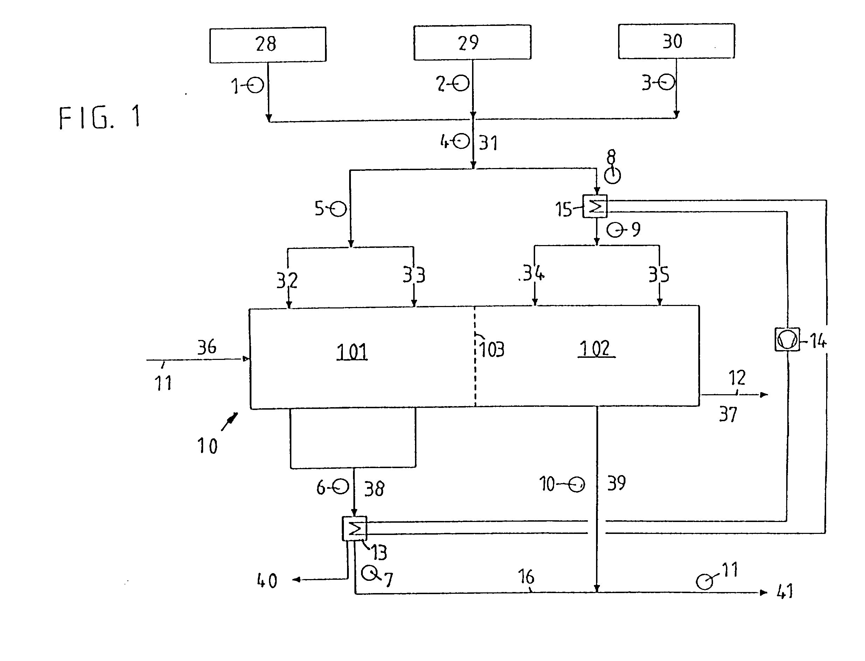

Die anliefernden Fahrzeuge kippen den Abfall auf den dafür vorgesehenen Flachbunker in der Annahmehalle ab. In dieser geschlossenen Annahmehalle befindet sich ein Aufgabegutförderer, der mit einem Radlager beschickt wird. Etwaige im Abfall enthaltene Störstoffe werden aussortiert und in bereitgestellt Container gegeben. Der Aufgabegutförderer gibt das aufgegebene Gut in eine Siebtrommel, wobei ein Siebschnitt erfolgt. Der erhaltene Siebdurchlauf wird über verschiedene Förderbänder weitertransportiert, wobei oberhalb der Förderbänder Magnetabscheider zur Separation ferromagnetischer Bestandteile verwendet werden. Neben entsprechenden Arbeitsflächen der Annahmehalle können auch noch weitere Hallen, wie die Aufbereitungs-und Intensivrottehalle oder eine Halle zur Lagerung des Stabilates bzw. zur sonstigen Aufbereitung vogesehen sein können. Die betreffende Abluft aus der Annahmehalle, der Aufbereitungs-und Intensivrottehalle sowie der Stabilataufbereitungshalle wird abgesaugt und über ein entsprechendes Luftverteilungssystem einer erfindungsgemäßen Vorrichtung zugeführt, die aus einem Rottetunnel 10 besteht, der sich wiederum in zwei Bereiche 101 und 102 aufteilt. Der aus der Annahmehalle über Förderbänder geförderte Abfall wird, wie durch Pfeil 11 angedeutet, in den ersten Rottetunnelteil 101 gefüllt, wobei die Füllung über eine dort vorgesehene Schüttöffnung vorgenommen wird. Der Transport des Materiales erfolgt in den Bereichen 101 und 102 mittels Schubböden, die das Material schrittweise von der Aufgabestelle (linker Bereich des Rottetunnels 101) zur Austrittsstelle (rechter Bereich des Rottetunnels 102) schrittweise befördern. Das der erfindungsgemäßen Verfahren unterzogene Material verläßt die Vorrichtung 10, wie durch Pfeil 12 angedeutet, als Stabilat mit einem auf 15 Massen-% verminderten Feuchtegehalt. Während der Vorwärtsbewegung wird das gesamte auf der Oberfläche ruhende Material vom Schubboden transportiert. Im Bodenbereich, d.h., an der Sohle des Reaktortunnels 10 sind Lüftungsrohre vorhanden, die über entsprechende Belüftungsgeräte eine intensive Dauerbelüftung darstellen, die im Bereich 101 eine intensive aerobe Rotte bewirkt, bei der die organische Substanz abgebaut wird. Solange das Rottematerial sich im Bereich 101 befindet, der permanent und gleichmäßig von unten belüftet wird, sinkt der Wassergehalt der Rotte auf etwa 28 Massen-% ab; diesen Wassergehalt besitzt das Material etwa im Bereich der gestrichelten Linie 103. Dem Bereich 101, wo die biologische Zersetzung stattfindet, wird die aus den genannten Hallen abgesaugte Luft direkt, d.h., ohne Konditionierung zuführt. Mittels der durch den biologischen Abbau freiwerdenden Energie kann die Luft bei der Durchströmung des Abfalles Wärme und Feuchtigkeit aufnehmen. Die Feuchtigkeitsausschleusung durch die Luft bewirkt eine Absenkung des Wassergehaltes des Abfalles während der fünftägigen biologischen Phase von 40 % auf 28 %. Der geschilderten biologischen Phase schließt sich die Trocknungsphase an, die ebenfalls 5 Tage dauert. Da während dieser Zeit keine Energie aus dem Abbau des Abfalles zur Verfügung steht, muß die zum Austrag der Feuchtigkeit erforderliche Energie von der Zuluft mitgebracht werden. Die Abluft aus der biologischen Phase (Bereich 101) bringt genügend Energie für die Trocknung mit, jedoch liegt das Temperaturniveau relativ niedrig. Um diese Energie optimal nutzen zu können, wird eine Wärmepumpe eingesetzt, welche die vorhandene Energie auf ein höheres und damit nutzbares Temperaturniveau pumpt. Wie aus der nachfolgenden Tabelle ersichtlich, nimmt die jeweilige Luft im Bereich der mit Kreisen umrahmten Ziffern 1 bis 11 unterschiedliche Zustände an, wobei die Temperatur der Luft aus der Annahmehalle, der Aufbereitungs- und Intensivrottehalle sowie der Stabilataufbereitungshalle (Ziffern 1 bis 4 bzw. 5) jeweils 10°C beträgt. Die in einem konkreten Ausführungsbeispiel gemessene Luftfeuchte betrug einheitlich 85 %. Ein Teil des Luftstromes wird dem Bereich 101 bodenseitig zugeführt, wobei die Luft die dort vorhandene Rotte durchströmt und als Abluft - siehe Ziffer 6 - den Bereich 101 verläßt. Die betreffende Abluft hat eine Temperatur von 41°C und eine Feuchte von 100 % (Sättigung). Mittels des Wärmetauschers 13 wird die vorhandene Wärmeenergie dem Luftstrom entnommen und mittels der Wärmepumpe 14 auf ein höheres Temperaturniveau gebracht, wonach die betreffende Energie durch den Wärmetauscher 15 den Luftstrom 8 von einer Temperatur von 10°C und einer Feuchte von 85 % auf 65°C erwärmt, wobei die Feuchte auf 4,2 % absinkt (siehe Ziffer 9 in der folgenden Tabelle). Die so erwärmte Luft wird dem zweiten Bereich 102 des Rottetunnels 10 bodenseitig aufgegeben und dazu benutzt, daß weiterbewegte Material, dessen Feuchte am Anfang dieses Teiles noch ca. 28 Massen-% beträgt, auf Werte von 15 Massen-% abzusenken, die das den Rottetunnel 102 über Leitung verlassende Stabilat am Ende des Przesses, d.h., nach insgesamt 10 Tagen besitzt. Der Rottetunnel 10 ist in vier einzelne regelbare Abschnitte aufgeteilt. Für die Regelung werden Drosselklappen verwendet, deren Einstellungen von den Temperaturen und der Feuchtigkeit der verschiedenen Zu- und Abluftsektionen des Rottetunnels 10 abhängt. In diesen Leitungen wird der Druck gemessen. Jeder Abschnitt ist mit einer ausreichenden Zahl von Lüftungsanschlüssen, beispielsweise 18, an das in den Schubboden eingebaute Luftverteilersystem versehen. über diese Lüftungsabschnitte ist eine Entwässerung des Rottetunnels möglich, wobei das Prozeßwasser am Tiefpunkt eines jeden Belüftungsabschnitte aufgefangen und einem Sammelbehälter zugeleitet wird. Die anfallenden Sickerwassermengen sind relativ gering und können bei Bedarf auch bei parallellaufenden Rottevorgängen, in denen eine vollständige biologische Zersetzung stattfindet, genutzt werden. Die den Wärmetauscher 13 verlassende Luft wird einer Abluftleitung 16 zugeführt, die auch die Abluft des zweiten Rottetunnelbereiches 102 aufnimmt und zu einem Biofilter führt. Ggf. kann in der Abluftleitung auch ein Gewebefilter enthalten sein, mit dem die Abluft von Staubteilen durch Filterung befreit wird. Der auf dem Filtertuch haftende Staub kann mittels Druckluftimpuls gelöst und in einen Filterkasten geworfen werden, der von Zeit zu Zeit gereinigt werden kann. Das Stabilat wird anschließend einer nicht dargestellten Ballenpresse zugeführt, woraus das zu Ballen gepreßte Material einem Zwischenlager bzw. einer Verbrennung zugeführt werden kann. Näheres ergibt sich hinsichtlich der Volumenströme und der Temperaturen unmittelbar aus Fig. 1 bzw. der nachfolgenden Tabelle.

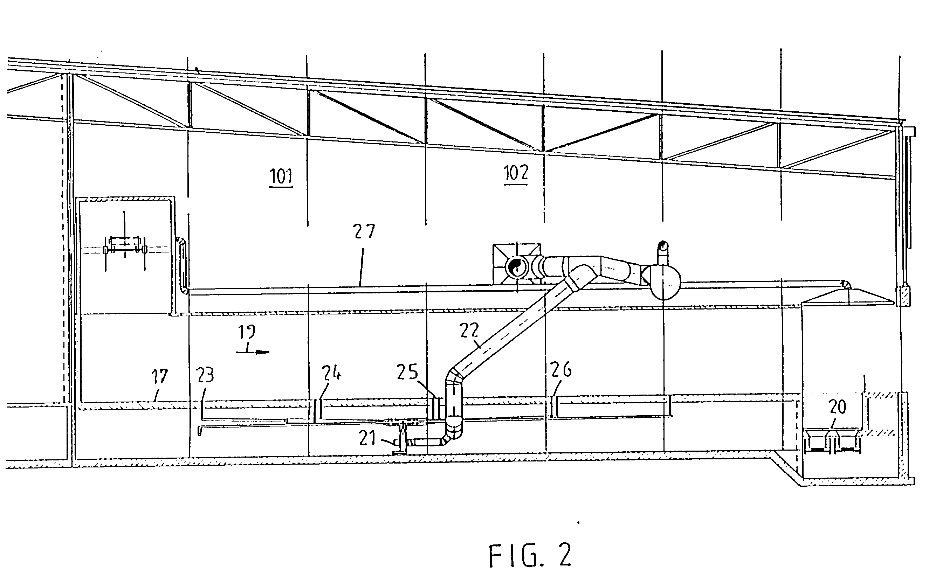

Der in Fig. 2 dargestellte Tunnel 10 besitzt einen Schubboden 17, oberhalb dessen ein Aufgabeförderband 18 angeordnet ist. Das von diesem Förderband abfallende Gut wird mittels der geschilderten Vor- und Rückwärtsbewegungen der einzelnen Schubbalken in Richtung des Pfeiles 19 bewegt, wobei die Durchlaufzeit im ersten Teil 101 des Tunnels 10 etwa 5 Tage beträgt. Durch schubweises Weiterbewegen durch den Bereich 102 wird das Material schließlich auf ein Austragsband 20 geführt, wo es als Stabilat abtransportiert wird. Die Verweildauer des Abfalles im Bereich 102 des Tunnels 10 beträgt ebenfalls 5 Tage. Der Tunnel 10 verfügt über ein Belüftungssystem, mittels dessen jeweils von unten nach oben Druckluft durch das dort auf dem Schubboden liegende Material gegeben wird. Hierzu dient ein Gebläse 21, was am Ende der Zuleitung 22 bodenseitig angeordnet ist und worüber über angedeutete Kanäle 23 bis 26 Luft bodenseitig unter Druck eingeblasen wird. Oberhalb des Bodens 17 befindet sich eine Abluftleitung 27, wobei in nicht näher dargestellter Weise die den Bereich 101 verlassende Abluft an einem Wärmetauscher 13 (siehe Fig. 1) vorbeigeführt und abgekühlt wird. Die durch die Luftzuführungen 25 und 26 strömende Druckluft ist erwärmt, beispielsweise auf 65°C, was unter Nutzung der aus der Prozeßwärme in Abschnitt 1 gewonnenen Energie mittels der Wärmepumpe 14 erreicht wird. Dies schließt nicht aus, daß zusätzliche Heizvorrichtungen verwendet werden, um den Trocknungsvorgang im Bereich 102 ggf. zu beschleunigen. Die gemeinsame Abluft der Bereiche 101 und 102 wird dann einem Staub- bzw. Biofilter zugeführt.

Die nachfolgend aufgeführten Bezugszeichen haben folgende Bedeutung:

| | |
|---|---|
| 28 | Annahmehalle |
| 29 | Aufbereitungs- und Intensivrottehalle |
| 30 | Stabilat Aufbereitungshalle |
| 31 | 41.500 m³/h |
| 32 | 7.000 m³/h |
| 33 | 7.000 m³/h |
| 34 | 13.750 m³/h |
| 35 | 13.750 m³/h |
| 36 | Abfall 4.29 Mg/h, 1.700 kg/h H₂O |
| 37 | Stabilat 2.88 Mg/h H₂O 4.32 kg/h |
| 38 | H₂O 748 kg/h |
| 39 | H₂O 520 kg/h |
| 40 | Kondensat |
| 41 | zum Biofilter |

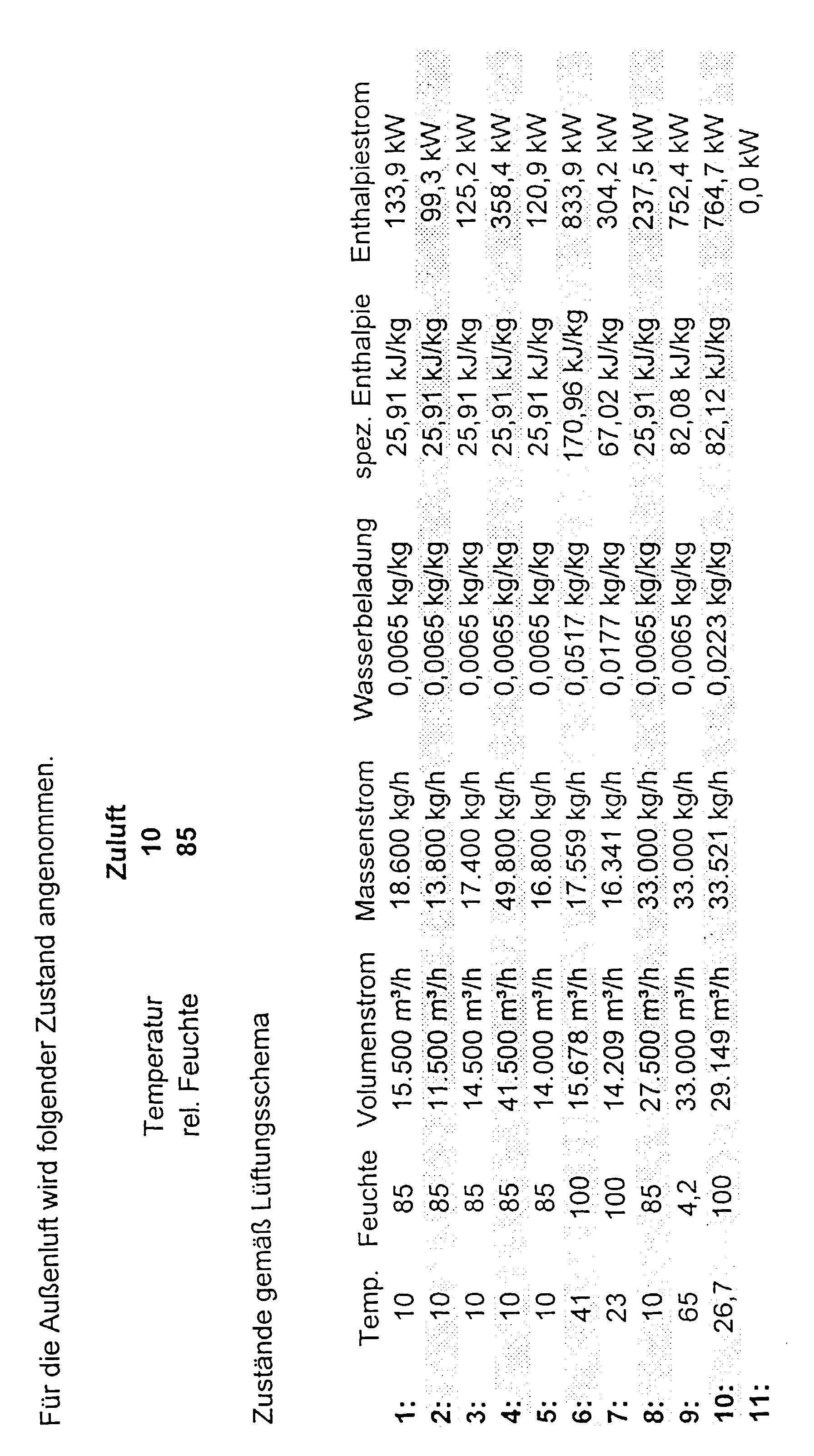

## Patentansprüche

1. Verfahren zur Trocknung von organischen Abfällen, bei dem die organischen Abfälle zwei zeitlich aufeinanderfolgenden Trocknungsstufen unterworfen werden, wobei die Abfälle in einer ersten Stufe belüftet und hierdurch gleichzeitig auf einen Restfeuchtegehalt von 30 bis 28 Massen-% teilentwässert werden und die bei der durch die Belüftung gestützte aerobe Verrottung entstehende Prozeßwärme in der zweiten Stufe zur Resttrocknung auf Restfeuchten von ≤15 Massen-% ausgenutzt wird und wobei die organischen Abfälle in einem geschlossenen Raum mit Außenluft durchströmt werden, die hierbei sowohl Feuchtigkeit als auch die Prozeßwärme aufnimmt und daß die mittels eines Wärmetauschers der Abluft der ersten Stufe entnommene Prozeßwärme mittels einer Wärmepumpe mit höherer Temperatur einem zweiten Wärmetauscher zugeführt wird, der die Luft, die durch die Abfälle in der zweiten Stufe geleitet wird, vorher erwärmt.

2. Verfahren nach Anspruch 1, dadurch gekennzeichnet, daß die Abfälle durch einen einzigen geschlossenen Raum kontinuierlich oder diskontinuierlich vorwärtsbewegt werden.

3. Verfahren nach Anspruch 1 oder 2, dadurch gekennzeichnet, daß die Luft in der ersten und/oder zweiten Stufe von unten nach oben die Abfälle durchströmt und/oder daß die Luft durch die erste und/oder zweite Stufe als Druckluft eingeblasen wird.

4. Verfahren nach einem der Ansprüche 1 bis 3, dadurch gekennzeichnet, daß die erste Stufe über eine Zeit von 5 bis 15 Tagen, vorzugsweise 5 Tagen, und die zweite Stufe über eine Zeit von 4 bis 6 Tagen, vorzugsweise 5 Tagen, abläuft.

5. Verfahren nach einem der Ansprüche 1 bis 4, dadurch gekennzeichnet, daß die Luft für die erste und die zweite Stufe demselben Reservoir entnommen wird, vorzugsweise einer Halle, in der unbehandelte und/oder bereits getrocknete Abfälle und/oder einer Rotte unterzogene Abfälle lagern und/oder daß die der ersten und zweiten Stufe entnommene Luft, d.h. die Abluft, einem Biofilter zugeführt wird.

6. Verfahren nach einem der Ansprüche 1 bis 5, dadurch gekennzeichnet, daß der Luftdurchsatz durch die Abfälle in der ersten und/oder der zweiten Stufe in Abhängigkeit der Rottematerialtemperatur, der Rottefeuchtigkeit, des CO₂-und/oder CH₄-Gehaltes in der jeweiligen Abluft gesteuert wird und/oder daß die Dauer der ersten Stufe durch das zeitliche Temperaturprofil der Abfälle bestimmt wird, derart, daß die erste Stufe mindestens so lange durchgeführt wird wie die Abfall-(Rotte-)Temperatur einen Wert von bis zu 70°C nicht unterschreitet und maximal so lange, bis die Rottetemperatur auf Werte um 45°C abgesunken ist.

7. Vorrichtung zur Durchführung des Verfahrens nach einem der Ansprüche 1 bis 6, dadurch gekennzeichnet, daß in unterschiedlichen miteinander verbundenen oder voneinander getrennten geschlossenen Räumen jeweils Belüftungseinrichtungen vorgesehen sind und daß die Abluftleitung des ersten Raumes einen Wärmetauscher aufweist, der mit einer Wärmepumpe verbunden ist, die mit einem Wärmetauscher in der Zuluftleitung für den zweiten Raum in Verbindung steht.

8. Vorrichtung nach Anspruch 9, dadurch gekennzeichnet, daß die Belüftungseinrichtung aus einem zumindest im ersten Raum unterhalb einer Sohle der zu einem Haufwerk aufgeschichteten Abfälle angeordneten Druckluftgebläse und einer oberhalb des Haufwerkes liegenden Luftabzugsleitung, ggf. mit einem Sauggebläse besteht und/oder daß beide Räume ein gemeinsames Druckluftgebläse aufweisen, von dem Zweigleitungen zu dem jeweiligen Räumen bzw. Raumteilen abgehen, wobei vorzugsweise daß das Druckluftgebläse mit einer Regelschaltung für die Regelung der Förderleistung in Abhängigkeit von durch Meßfühlern gemessene CO₂-, CH₄- oder Feuchtigkeits- und Temperaturwerten verbunden ist.

9. Vorrichtung nach einem der Ansprüche 7 oder 8, dadurch gekennzeichnet, daß in einer einzigen Halle, vorzugsweise einem Rottetunnel, Schubböden als Fördermittel für die Abfälle vorgesehen sind, mittels derer die Abfälle vom Eintritts- zum Austrittsende kontinuierlich oder diskontinuierlich bewegbar sind und daß die Halle bzw. der Rottetunnel die zwei miteinander verbundenen Räume bildet, wobei in dem ersten Teil das Rottematerial (die Abfälle) aerob behandelt und hierbei vorgetrocknet und in dem zweiten Teil die weitergeförderte Rotte mittels erwärmter Luft auf den Restfeuchtegehalt ≤15 Massen-% getrocknet wird.

10. Vorrichtung nach einem der Ansprüche 7 bis 9, dadurch gekennzeichnet, daß die Abluftleitungen beider Räume bzw. der Halle miteinander verbunden sind und in einen Biofilter münden und/oder daß unterhalb der Sohle Sicken vorgesehen sind, in denen das Prozeßwasser aufgefangen und einem Sammelbehälter zugeleitet wird.

## Claims

1. Process for drying organic waste, wherein the organic waste is subjected to two successive drying stages, where the waste is aerated in a first stage and thus partly dewatered in the like manner to a residual moisture content of 30 to 28 mass % and the process heat resulting from the aerobic decomposition supported by the aeration is used in a second stage for residual drying to residual moisture contents ≤ 15 mass % and wherein the organic waste are poured through with outside air taking up thereby moisture as well as process heat and that the process heat withdrawn from the exhaust gas of the first stage by a heat exchanger is led with a higher temperature by means of a heat pump to a second heat exchanger heating up the air prior to leading the air through the waste in the second stage.

2. Process according to claim 1, characterised in that the waste is moved continuously or discontinuously forward through a single closed room.

3. Process according to claim 1 or 2, characterised in that the air poured through the waste from the top to the bottom in the first and/or the second stage and/or the second stage and/or that the air is blown under pressure through the first and second stage.

4. Process according to one of the claims 1 to 3,
characterised in that the first stage takes a time of 5 to 15 days, preferably 5 days and that the second stage takes a time of 4 to 6 days, preferably 5 days.

5. Process according to one of the claims 1 to 4,
characterised in that the air for the first and for the second stage is withdrawn from the same reservoir, preferably a hall in which untreated and/or still dried waste and/or decomposting waste is stored and/or that the air withdrawn from the first and the second stage, that is the exhaust air is led to a bio filter.

6. Process according to one of the claims 1 to 5,
characterised in that the air supply through to waste in the first and/or the second stage is controlled in relation to the retting material temperature, the retting moisture, the CO₂- and/or the CH₄-content in the respective exhaust air and/or that the duration of the first stage is determined by the temporal temperature profile of the waste in that way that the first stage takes at least as long as the waste (retting) temperature does not fall short of a value up to 70°C and at maximum as long as the retting temperature drops below value of about 45°C.

7. Device for carrying out the process according to one of the claims 1 to 6, characterised in that ventilating arrangements are provided in different closed rooms connected or departed one to the other and that the exhaust air line of the first room has a heat exchanger connected with a heat pump which is connected to a heat exchanger in the air supply line for the second room.

8. Device according to claim 9, characterised in that the ventilating arrangements consist of a pressure air blower at least in the first room under the bottom of the waste being stratified up to a heap and a suction line optionally with a suction apparatus arranged above the heap, and/or that both rooms have a common pressure air blower with branch lines to the respective rooms or room parts, whereby preferably the pressure air blower is connected a control circuit for controlling of the output in relation to CO₂-, CH₄- or moisture- and temperature-values measured by detecting sensors.

9. Device according to one of the claims 7 or 8,
characterised in that in one hall, preferably a retting tunnel, slide bar grounds are provided as conveyor system for the waste thereby moved continuously or discontinuously from the input to the output end and that the hall respectively the retting tunnel form the two rooms connected together, whereby in the first part the retting material (the waste) is treated aerobically and hereby predried and in a second part the advanced retting material is dried to a residual moisture content of ≤ 15 mass % by means of heated air.

10. Device according to one of the claims 7 to 9,
characterised in that the exhaust lines of both rooms respectively the hall are connected together and lead to a bio filter and/or that below the bottom drainage arrangements are provided collecting the process water and leading it to a collecting box.

## Revendications

1. Procédé pour le séchage de déchets organiques, dans lequel les déchets organiques sont soumis à deux étapes successives de séchage, les déchets étant aérés dans une première étape et, de cette manière, en même temps déshydratés partiellement de manière à avoir une teneur en humidité résiduelle de 30 à 28 % en masse, et la chaleur de processus produite lors de la décomposition aérobie soutenue par l'aération étant utilisée dans la deuxième étape pour le séchage résiduel à des teneurs en humidité résiduelle de < 15 % en masse, et dans lequel les déchets organiques sont traversés d'air extérieur dans un espace clos, qui - durant cela - prend aussi bien de l'humidité que la chaleur de processus, et dans lequel la chaleur de processus prélevée de l'air d'évacuation de la première étape au moyen d'un échangeur de chaleur est amenée avec une température plus élevée, à l'aide d'une pompe de chaleur, à un deuxième échangeur de chaleur qui, auparavant, chauffe l'air que l'on fait passer à travers les déchets dans la deuxième étape.

2. Procédé selon la revendication 1, caractérisé par le fait que les déchets sont avancés de façon continue ou de façon discontinue à travers un seul espace clos.

3. Procédé selon la revendication 1 ou 2, caractérisé par le fait que l'air dans la première et/ou dans la deuxième étape traverse les déchets d'en bas vers le haut, et/ou que l'air dans la première et/ou la deuxième étape est insufflé comme air comprimé.

4. Procédé selon l'une des revendications 1 à 3, caractérisé par le fait que la première étape se déroule pendant une durée de 5 à 15 jours, de préférence de 5 jours, et que la deuxième étape se déroule pendant une durée de 4 à 6 jours, de préférence de 5 jours.

5. Procédé selon l'une des revendications 1 à 4, caractérisé par le fait que l'air pour la première et pour la deuxième étape est prélevé du même réservoir, de préférence d'un hall dans lequel sont stockés des déchets non traités et/ou déjà séchés et/ou des déchets soumis à une pourriture, et/ou que l'air prélevé de la première et de la deuxième étape, c'est-à-dire l'air d'évacuation, est amené à un biofiltre.

6. Procédé selon l'une des revendications 1 à 5, caractérisé par le fait que le débit d'air à travers les déchets dans la première et/ou dans la deuxième étape est commandé en fonction de la température de la matière soumise à la pourriture, de l'humidité de la matière soumise à la pourriture, de la teneur en CO₂ et/ou en CH₄ dans l'air respectif d'évacuation, et/ou que la durée de la première étape est déterminée par le profil temporel de température des déchets, de telle façon que la première étape est effectuée du moins aussi longtemps que la température des déchets (matières soumises à la pourriture) ne sera pas inférieure à une valeur allant jusqu'à 70°C, et au maximum jusqu'au moment où la température de la matière soumise à la pourriture est passée à des valeurs d'environ 45°C.

7. Dispositif pour la mise en oeuvre du procédé selon l'une des revendications 1 à 6, caractérisé par le fait que des dispositifs d'aération sont prévus respectivement dans des espaces clos différents reliés entre eux ou séparés l'un de l'autre, et que la conduite pour l'évacuation d'air du premier espace présente un échangeur de chaleur qui est relié à une pompe de chaleur qui communique avec un échangeur de chaleur dans la conduite pour l'amenée d'air pour le deuxième espace.

8. Dispositif selon la revendication 9, caractérisé par le fait que le dispositif d'aération se compose d'un soufflet à air comprimé qui est disposé au moins dans le premier espace au-dessous d'un fond des déchets empilés en tas, ainsi que d'une conduite pour l'évacuation d'air, le cas échéant avec un ventilateur aspirant, qui est située au-dessus dudit tas, et/ou que les deux espaces présentent un soufflet commun à air comprimé d'où partent des conduites dérivées vers les espaces respectifs ou bien vers les parties d'espace respectives, de préférence le soufflet à air comprimé étant relié à un circuit de réglage pour le réglage du débit en fonction de valeurs de CO₂, de CH₄ ou de valeurs d'humidité et de température, qui sont mesurées au moyen de capteurs.

9. Dispositif selon l'une des revendications 7 ou 8, caractérisé par le fait que l'on prévoit dans un seul hall, de préférence dans un tunnel de pourriture, des fonds à barres coulissantes en tant que moyens de transport pour les déchets, par l'intermédiaire desquels les déchets peuvent être déplacés de façon continue ou discontinue de l'extrémité d'entrée vers l'extrémité de sortie, et que le hall ou bien le tunnel de pourriture forme les deux espaces reliés entre eux, dans la première partie ayant lieu le traitement aérobie de la matière soumise à la pourriture (des déchets) et en même temps le préséchage et dans la deuxième partie ayant lieu le séchage de la matière avancée soumise à la pourriture, au moyen d'air chauffé, à la teneur en humidité résiduelle de ≤ 15 % en masse.

10. Dispositif selon l'une des revendications 7 à 9, caractérisé par le fait que les conduites pour l'évacuation d'air des deux espaces ou bien du hall sont reliées entre elles et débouchent dans un biofiltre, et/ou que des rainures sont prévues au-dessous du fond, dans lesquelles l'eau de processus est capté et amené à un réservoir collecteur.
